# EUROPEAN PATENT SPECIFICATION

(11) **EP 2 172 434 B1**
(45) Date of publication and mention of the grant of the patent: **11.03.2015**
(21) Application number: 08165671.2
(22) Date of filing: 02.10.2008
(51) Int. Cl.: C04B 16/06, C04B 28/02

(54) **Fibre-cement product compositions and shaped products obtained therefrom.**
Zusammensetzung für Faserzementprodukte und daraus hergestellte Formprodukte
Compositions de produit de fibrociment et produits formés obtenus à partir de celles-ci

(43) Date of publication of application: 07.04.2010
(73) Proprietor: REDCO S.A., 1880 Kapelle-op-den-Bos. (BE)
(72) Inventor: De Lhoneux, Benoit,, 1880 Kappelle-op-den-Bos, (BE)
(74) Representative: Van Steenlandt, Wim August Maria

(56) References cited:
- EP-A- 0 363 891
- EP-A- 1 854 770
- FR-A- 2 808 795
- JP-A- 2001 139 360
- JP-A- 2002 011 715
- JP-A- 2004 352 556

## Description

### Field of the invention

The invention concerns a fibre-cement product composition comprising reinforcing fibres comprising polypropylene fibres (A) and other synthetic organic fibres (B).

The invention relates also to shaped fibre-cement products manufactured from said composition. Roof and façade elements, flat and corrugated sheets and slates can be cited amongst others as examples of shaped fibre-cement products.

### State of the art

Shaped fibre-cement products are manufactured starting from an aqueous suspension comprising hydraulic binders, reinforcing and processing fibres, and possibly fillers and additives. This aqueous suspension is mixed in order to obtain a uniform distribution of the components. This suspension is then dewatered. The so obtained green fresh product can be shaped into a flat sheet, a corrugated sheet or a tube. The green shaped product is then hardened under atmospheric conditions or under specific pressure, temperature and humidity conditions.

The Hatschek process is most widely known for the manufacturing of fibre-cement products. This process, initially applied to the asbestos-cement, is exhaustively described in the book "Asbestzement" by Harald Klos (Springer Verlag, 1967). Other manufacturing processes known by the man skilled in the art which can be cited are Magnani, Mazza, Flow-on, extrusion and injection. The Hatschek process, particularly suited for the manufacture of flat sheets, corrugated sheets and tubes, is based on the use of a dewatering cylindrical sieve. In this way, a layer originating from a diluted suspension of fibres, cement, fillers and additives contained in a vat is transferred to a felt, through a cylindrical sieve; this layer is then enrolled on a forming drum until the required thickness of the sheet is obtained.

The fibre-cement sheet shaped on the forming drum is cut and removed from the drum, once the desired thickness is obtained. This sheet is then subjected to a forming step, which in the case of corrugated sheets consists of putting it between corrugated templates, for instance metal corrugated templates which have been oiled. Afterwards, it is submitted to a hardening stage at room temperature (air curing).
For certain applications the green product is compressed between the forming and the curing stage (post- compression). We call these pressed fibre-cement products opposed to non-pressed fibre-cement products. The pressed fibre-cement products are compressed at pressures equal to or higher than 4,9 MPa. Usually, the applied pressures are comprised between 9,8 MPa and 24,5 MPa.

The reinforcing and processing fibres have to be alkali-resistant (e.g. to saturated calciumhydroxide solutions). They also have to be easily dispersable in an aqueous diluted cement dispersion. They have to remain uniformly dispersed upon the addition of other additives as well. The good dispersion of fibres is important on the one hand to make sure that these fibres do not form agglomerates, and on the other hand to ensure the homogeneous concentration of the fibres in the finished fibre-cement product. The fibres used as reinforcing agents must also have good mechanical properties. The literature contains publications related to the use of natural or synthetic organic and inorganic fibres. Thus fibres of cellulose, polyamide, polyester, polyacrylonitrile (PAN), polypropylene (PP) and poly (vinylalcohol) (PVA) were used for the reinforcement. In the same way, work has been done with glass, steel, aramide and carbon fibres. Unfortunately, no natural or synthetic fibre has all the previously mentioned properties. Besides, it is important to manufacture shaped fibre-cement products with good mechanical properties and at an interesting cost price. Accordingly, it is known to use hydraulic setting compositions comprising synthetic reinforcing fibres. Among reinforcement fibres currently used, fibres of polyacrylonitrile (PAN) and poly (vinylalcohol vinyl) (PVA) are generally preferred. Separately or in combination, these fibres make it possible to manufacture shaped fibre- cement products which have a high tensile strength and flexural resistance. Unfortunately, PVA and PAN fibres do not confer to the shaped products a sufficient impact resistance, especially after ageing during exterior exposure. The polypropylene (PP) fibres have an excellent resistance to alkalis, even at temperatures close to 110 °C. These fibres are durable and inexpensive. However, PP fibres only are in general technically insufficient to reinforce cement containing materials.

Document JP2004-352556 discloses hydraulic compositions comprising PVA reinforcing fibres having a titre of 2 or 2,2 dtex and polypropylene fibres characterized by a titer of 2,2 dtex. However, the fibre-cement plates obtained from such compositions have an insufficient impact resistance when they are used for example for roofing applications, and more particularly after natural ageing during exposure to carbon dioxide present in the air. Patent application EP-A-1854770 describes compositions for the manufacture of fibre-cement articles comprising poly (vinylalcohol) fibres characterized by a titre of at least 4,0 dtex and lower than 15,0 dtex, and synthetic organic fibres selected among fibres made of poly (vinylalcohol) with a titre of at least 1,5 dtex and lower than 3,0 dtex, or of polymers or copolymers of propylene having a titre of at least 0,7 dtex and lower than 3,0 dtex or their blends. The products manufactured from these compositions have an enhanced impact resistance with respect to the prior art, but there is still a need for improvement.

### Summary of the invention

It is a purpose of the invention to propose a composition for the manufacture of fibre-cement products comprising polypropylene fibres (A) and synthetic organic fibres (B), which discards the disadvantages of the existing compositions.

It is a purpose of the invention to propose a composition for fibre-cement products which is easy to implement and comprising inexpensive reinforcing fibres resistant to alkalis, and which present a homogeneous and stable dispersion as well as a high reinforcement capacity. Moreover, it is a question of proposing a composition of fibre-cement products with an excellent processability, a good flexural resistance and a high and durable impact resistance, even after ageing during external exposure, and whose cost is not prohibitory.

To this end, the composition according to the invention is **characterized in that** it comprises polypropylene fibres (A) and synthetic organic fibres (B), **characterized in that** :
- the polypropylene fibres (A) have a titre higher than 6,0 dtex and lower than 20,0 dtex.; and
- the synthetic organic fibres (B) are selected among poly(vinylalcohol) fibres (B1) with a titre of at least 0,5 dtex and lower than 15,0 dtex, or polypropylene fibres (B2) having a titre of at least 0,5 dtex and lower than 3,0 dtex (B2) or their blends.

Compositions comprising polypropylene fibres (A) having a titre not higher than 6,0 dtex result in fibre-cement articles with a lower impact resistance. Compositions comprising polypropylene fibres (A) having a titre of at least 20, 0 dtex suffer from a bad dispersability. Preferably, the composition according to the present invention comprises polypropylene fibres (A) having a titre of at least 10,0 dtex and lower than 18,0 dtex.

The composition according to the present invention comprises synthetic organic fibres (B) selected among poly(vinylalcohol) fibres (B1) with a titre of at least 0,5 dtex and lower than 15,0 dtex, or polypropylene fibres (B2) having a titre of at least 0,5 dtex and lower than 3,0 dtex (B2) or their blends. Compositions comprising poly(vinylalcohol) fibres (B1) having a titre lower than 0,5 dtex suffer from a bad processability, whereas poly(vinylalcohol) fibres (B1) having a titre of at least 15 dtex suffer from bad dispersion and lead to fibre-cement products which do not have the required mechanical properties. Compositions comprising poly(vinylalcohol) fibres (B1)with a titre of at least 1,0 dtex and lower than 10,0 dtex are preferred. Compositions comprising polypropylene fibres (B2) characterized by a titre lower than 0,5 dtex give rise to processing problems during the manufacturing of fibre-cement products. Compositions comprising polypropylene fibres (A) and polypropylene fibres (B2), the latter characterized by a titre of at least 3,0 dtex, cause dispersion problems and hence lead to fibre-cement products with inferior mechanical properties. Compositions comprising polypropylene fibres (B2) with a titre of at least 0,7 dtex and lower than 2,5 dtex are preferred.

Preferably, the polypropylene fibres (A) of the composition according to the present invention have a length in the range of from 6 mm to 30 mm. Fibres (A) with a length of from 8 to 25 mm are particularly preferred. Good results are obtained with fibres(A) characterized by a length of from 10 to 15 mm. Compositions comprising polypropylene fibres (A) characterized by a length shorter than 6 mm or longer than 30 mm lead to fibre-cement articles with an inferior impact resistance.
Preferably, the length of the other synthetic fibres (B) of the composition according to the present invention is in the range of from 2 to 20 mm. Synthetic fibres (B) characterized by a length of from 4 to 10 mm are particularly preferred.

According to a particular embodiment, the composition according to the invention is **characterized in that** it comprises fibres (A) and fibres (B) characterized by a tenacity of at least 8 cN/dtex.
Fibre-cement products comprising fibres (A) and (B) whose tenacity is lower than 8 cN/dtex do not have the required mechanical properties.

The composition according to the present invention comprises preferably from 0,05 to 5,0 weight % of fibres (A) with respect to the total dry weight of the composition. In order to make reading easier and for clarity, the expression "weight percentage of fibre" used in the following description must be understood as related to fibres in a composition, like "weight percentage of fibre weight compared to the initial dry total weight of the composition" .
Products manufactured from compositions comprising less than 0, 05 weight % of fibres (A) suffer from a low impact resistance. Compositions comprising more than 5, 0 weight % of fibres (A) give fibre-cement products having insufficient mechanical properties due to a bad dispersion of fibres in the cement matrix. Compositions comprising from 0, 1 to 1,5 weight % of fibres (A) are particularly preferred.

According to an advantageous embodiment, the composition according to the invention is **characterized in that** it comprises from 0, 5 to 5 weight % of fibres (B) with respect to the total initial dry weight of the composition. Indeed, the fibre-cement products manufactured using compositions comprising less than 0, 5 weight % of fibres (B) weight suffer from a flexural resistance which is too low. In addition, products manufactured from compositions comprising more than 5 weight% of fibres (B) have insufficient mechanical properties due to a bad dispersion of fibres in the cement matrix. Advantageously, the composition according to the present invention comprises from 0, 5 to 3, 5 weight % of fibres (B). Good results were obtained with compositions comprising from 0,5 to 2,5 weight % of fibres made of poly(vinylalcohol) (B1) and from 0,3 to 1,0 weight % of polypropylene fibres (B2).

The section of the fibres (A) and (B) can be circular or of irregular form, for example in form of X or Y. The fibres can be textured while they are stretched or afterwards. According to a particular embodiment, the fibres (A) and/or (B2) can also be obtained starting from an extruded polypropylene film. The fibres can then present the shape of ribbon. Preferably, the polypropylene fibres (A) and (B2) are multifilaments with a circular cross-section and obtained by melt-spinning through a spinnerette. The fibres (A) and (B2) are made of polymers, co- or terpolymers of propylene and can be obtained from any type of polypropylene resin usually used. At least a part of the fibres (A) and/or (B2) can possibly comprise fillers. Preferably, they can moreover possibly comprise a hydrophilizing agent such as an alkaline metal salt of an alkylphosphate, such as a potassium or sodium salt, comprising advantageously from 8 to 18 carbon atoms. According to an alternative mode of execution, the fibres (A) and/or (B2) can be made of high isotacticity polypropylene. According to another form of execution of the invention, the fibres (A) and/or (B2) can comprise coextruded bicomponent fibres, consisting for example, of a core and an external layer, the latter containing fillers, preferably alkaline earth metal carbonate particles, such as for example, calcium carbonate, magnesium carbonate or their blends. According to an advantageous procedure of this invention, the fibres (A) and/or (B2) have been submitted to a surface oxidation treatment, such as corona discharge or plasma, in order to improve their affinity to the cement matrix. According to a particularly advantageous alternative of this invention, the fibres (A) and/or (B2) can have undergone a surface oxidation treatment, followed by a treatment using wetting agents, which can be applied by spraying of or by immersion in a hydrophilic avivage or more preferably an aqueous dispersion of polar organic polymers or a dispersion of olefinic homopolymers or copolymers of olefinic monomers modified after synthesis by polar groups chosen preferably among maleic anhydride, acrylic acid, or the methacrylic acid, and obtained for example by grafting.

According to another preferred embodiment of the present invention, the fibres (A) are characterized by a Young's modulus of at least 160cN/dtex. Polypropylene fibres (A) having an elongation at breakage not higher than 17% are preferred. The use of fibres (A) with a Young's modulus of a least 160 cN/dtex and/or an elongation at break not higher than 1 7% gives fibre-cement articles with enhanced impact properties.

The composition according to the present invention preferably further comprises cellulose fibres. Cellulose fibres obtained from chemical wood pulp are preferred. Kraft pulp is particularly preferred. The cellulose fibres can be bleached or unbleached. Suitable pulps are processed from softwood , e.g. Pinus Radiata or hardwood . Good results were obtained with cellulose fibres from unbleached, softwood kraft pulp. Cellulose fibres characterized by a Kappa number in the range of 20 to 40, more particularly in the range of 20 to 30 are especially preferred. Cellulose fibres refined to a Shopper Riegler degree in the range of 1 5 to 85, more particularly in the range of 25 to 70 give satisfactory results. Preference is given to cellulose fibres with a length determined according to TAPPI method T271 in the range of from 0,8 to 4 mm. Cellulose fibres with an alkali soluble content as measured according to TAPPI method T212 below 3,5 weight% are suitable. Preferable compositions comprise from 0,5 to 12 weight% of cellulose fibres. Particularly preferred compositions comprise from 1 to 10 weight% of cellulose fibres. Good results were obtained with compositions comprising from 1 to 5 weight% of cellulose fibres.

According to a particular embodiment, the composition according to the invention is **characterized in that** it comprises besides cellulose fibres, the fibres (A) and the fibres (B), other reinforcing fibres chosen among inorganic or organic fibres. Preferably, the organic fibres are selected among fibres of polyacrylonitrile, polyamide, polyester, aramide and carbon. Advantageously, the inorganic fibres are selected among glass fibres, rockwool, slag wool, wollastonite fibres, ceramic fibres and similars. The composition according to the present invention can further comprise fibrils, for example, polyolefinic fibrils.

According to a particular embodiment, the composition according to the invention is **characterized in that** it comprises cement as hydraulic binder. Advantageously, cement is selected among Portland cement, cement with high alumina content, Portland cement of iron, the trass-cement, slag cement, plaster, calcium silicates formed by autoclave treatment and combinations of particular binders. Portland cement is particularly well suited.

According to a particular embodiment, the composition according to the invention is **characterized in that** it possibly comprises fillers and additives. The additives are preferably selected among the dispersants, plasticizers and the flocculants. The fillers are advantageously selected among the fly-ashes, amorphous silica, ground quartz, the ground rock, clays, blast furnace slag, carbonates, pozzolanas, etc. The total quantity of fillers is, preferably, lower than 50 weight % compared to the total initial dry weight of the composition.

It is an object of the invention to provide fibre-cement products having a satisfactory flexural resistance combined with an excellent impact resistance, even after ageing. For this reason, the fibre-cement product according to the invention is **characterized in that** it is manufactured starting from a composition according to the present invention. The product according to the invention has a good Charpy impact resistance, measured according to standard ASTM D- 256-81 (method B), even after ageing during exposure to carbon dioxide. In addition, the product according to the present invention has a high flexural modulus. According to a particular embodiment, the product according to the invention is preferably a roofing or façade element, a flat or corrugated sheet. The composition according to the invention is particularly suited to the manufacture of corrugated sheets. According to another particular embodiment, the product has the shape of a pipe, of a tank storage element or of all other accessories of various shapes.

### Detailed description of particular embodiments

It will be obvious for a person skilled in the art that the present invention is not limited to what was disclosed and described particularly above. All new characteristics and each combination of these characteristics belong to the scope of the invention. The numerical references in the claims do not limit the scope of their protection. The use of the verbs "to comprise or to include" and their conjugated forms does not exclude the presence of other elements than those cited in the claims. The use of the article "a or an" in front of an element, does not exclude the presence of a plurality of such elements. The invention is described hereafter in a detailed way using particular examples of embodiment.

### EXAMPLES

The characteristics of the fibres are given in table 1.

**Table 1**

| Fibre | Type | Titre (dtex) | Length (mm) | Tenacity (cN/dtex) | E-modulus (cN/dtex) | Elongation at break (%) |
|---|---|---|---|---|---|---|
| Fibre (A) (1) | PP^{(a)} | 11,4 | 13 | 11,0 | 188 | 12,4 |
| Fibre (A)(2) | PP^{(a)} | 11,4 | 25 | 11,0 | 188 | 12,4 |
| Fibre (B1)(1) | PVA^{(b)} | 2,0 | 6 | 14,3 | 359 | 5,7 |
| Fibre (B1)(2) | PVA^{(b)} | 7,0 | 6 | 11,5 | 290 | 6,4 |
| Fibre (B2) | PP^{(a)} | 0,9 | 6 | 9,5 | 116 | 21,9 |

| | | | | | | |
|---|---|---|---|---|---|---|
| (a) PP : polypropylene (b) PVA : poly(vinylalcohol) | | | | | | |

### Preparation of the blends and production on Mini-Hatschek machine (MiH)

Cementitious products were manufactured by the Hatschek technique, according to a pilot method reproducing the main characteristics of the products obtained by industrial methods. The compositions which have been used after strong dilution with water, are mentioned in tables II and III (concentrations of solids expressed in weight % with respect to the total dry matter). The cellulose fibres SUKP 65SR refer to an unbleached kraft pulp of coniferous trees refined to 65° Schopper-Riegler and P30 indicates Portland cement.

The sheets were hardened during one night at 50 °C, and afterwards under plastic cover sheet during 7 days at room temperature.

### Measurement of the Charpy impact resistance

The Charpy impact resistance (expressed in kJ/m²) is measured according to standard ASTM D-256-81, method B, using an apparatus Zwick DIN 5102.100/00 on air-dry MiH samples of 15*120 mm and a span of 100 mm. Ten MiH samples are measured in the two directions (machine direction and direction perpendicular to this) 2 weeks after the production.

The impact resistance of the samples in table III has also been measured after ageing in an oven of 600 L at 60 °C and 90 % of relative humidity, with injection of 1,5 1 CO₂/min during 24 hours; the CO2 concentration ranges thus from 7 % at the beginning of conditioning to 12 % at the end of the conditioning.

### Measurement of flexural resistance

The flexural resistance (expressed in MPa) is determined by a flexural test on three points using an apparatus UTS, a span of 146 mm and a test speed of 20 mm/minute on air-dry MiH samples of 50*160 mm. Ten samples are measured in the two directions (machine direction and direction perpendicular to this), 2 weeks after the production. The apparatus records the curve stress/strain. Values of SMOR (maximum stress) are mentioned in tables II and III.

The results of the impact and flexural resistance measurements mentioned in tables II and III are expressed in % compared to a reference.

In table II, comparative example 1 is taken as reference for comparative example 2 and example 1, comparative example 3 is taken as reference for comparative example 4 and example 2 , and comparative example 5 is taken as reference for example 3.

In table III, comparative example 7 is taken as reference for examples 4-6.

**Table II - Examples 1-3 and comparative examples 1-5**

| | Comp Ex 1 | Comp Ex 2 | Ex 1 | Comp Ex 4 | Comp Ex 4 | Ex 2 | Comp Ex 5 | Ex 3 |
|---|---|---|---|---|---|---|---|---|
| COMPOSITION (wt%) | | | | | | | | |
| Fibres (A)(1) | | | 0,6 | | | 0,6 | | 0,6 |
| Fibres (B1)(1) | 2,0 | 1,4 | 1,4 | | | | | |
| Fibres (B1)(2) | | | | 2,0 | 1 ,4 | 1 ,4 | | |
| Fibres (B2) | | 0,6 | | | 0,6 | | 2,0 | 1,4 |
| SUKP 65SR | 3,0 | 3,0 | 3,0 | 3,0 | 3,0 | 3,0 | 3,0 | 3,0 |
| Amorphous silica | 6,4 | 6,4 | 6,4 | 6,4 | 6,4 | 6,4 | 6,4 | 6,4 |
| Ground CaCO₃ | 10,0 | 10,0 | 10,0 | 10,0 | 10,0 | 10,0 | 10,0 | 10,0 |
| P30 | 78,6 | 78,6 | 78,6 | 78,6 | 78,6 | 78,6 | 78,6 | 78,6 |

| PROPERTIES | | | | | | | | |
|---|---|---|---|---|---|---|---|---|
| Charpy Impact unaged (%/reference) | 100 | 104 | 178 | 100 | 96 | 165 | 100 | 155 |
| SMOR (%/reference) | 100 | 93 | 88 | 100 | 92 | 81 | 100 | 85 |

The results in table II show that compositions comprising fibres (A) (examples 1-3) have an improved impact resistance at a level which can not be achieved by the use of fibres (B1) (comparative examples 1 and 3) or fibres (B2) (comparative example 5) nor by any blend of the the fibres (B1) and (B2) (comparative examples 2 and 4). The partial substitution of PVA fibres (B1)(1) by PP fibres (B2) leads to fibre-cement products with only slightly improved impact properties (comparative example 2 versus comparative example 1).

**Table III - Examples 4-6 and comparative example 6**

| | Comp. Ex 6 | Ex 4 | Ex 5 | Ex 6 |
|---|---|---|---|---|
| COMPOSITION (wt%) | | | | |
| Fibres (A)(1) | | 0,5 | | 0,2 |
| Fibres (A)(2) | | | 0,5 | |
| Fibres (B1)(1) | 0,8 | 0,8 | 0,8 | 0,8 |
| Fibres (B1)(2) | 1 ,0 | 1 ,0 | 1 ,0 | 1 ,0 |
| Fibres (B2) | 0,5 | | | 0,5 |
| SUKP 65SR | 3,0 | 3,0 | 3,0 | 3,0 |
| Amorphous silica | 6,4 | 6,4 | 6,4 | 6,4 |
| Ground CaCO₃ | 12,0 | 12,0 | 12,0 | 12,0 |
| P30 | 76,3 | 76,1 | 76,3 | 76,1 |

| PROPERTIES | | | | |
|---|---|---|---|---|
| Charpy Impact unaged (%/reference) | 100 | 154 | 145 | 129 |
| Charpy Impact CO2 aged (%/reference) | 100 | 158 | 137 | 132 |
| SMOR (MPa) (%/reference) | 100 | 93 | 92 | 100 |

Table III shows that fibres (A) improve the impact resistance both aged (after carbonation) and unaged and that the best impact results are obtained by using fibres (A)(1) with a length of 13 mm (example 4 versus example 5).

Compositions comprising an amount of fibres (A) and (B1) (examples 4 and 5) have a higher impact strength than compositions comprising an equivalent amount of fibres (B1) and (B2), and have a flexural strength which is maintained at about 90 % compared to a composition comprising only fibres (B1) and (B2)(comparative example 6).
Example 6 shows that the addition of a minor quantity of fibres (A) to a composition comprising fibres (B1)(1), (B1)(2) and (B2) considerably improves the impact resistance, measured both on aged and unaged samples, while the flexural strength is maintained.
Fibre-cement product manufactured from compositions comprising fibres (A) and fibres (B) according to the present invention have better balanced impact resistance and flexural strength properties.

The present invention was described in specific terms of execution which are an illustration of the invention and which should not be considered as restrictive.

## Claims

1. Composition for the manufacture of fibre-cement products comprising polypropylene fibres (A) and other synthetic organic fibres (B), **characterized in that** :
- the polypropylene fibres (A) have a titre higher than 6,0 dtex and lower than 20,0 dtex; and
- the synthetic organic fibres (B) are selected among poly(vinylalcohol) fibres (B1) with a titre of at least 0,5 dtex and lower than 15,0 dtex, or polypropylene fibres (B2) having a titre of at least 0,5 dtex and lower than 3,0 dtex (B2) or their blends.

2. Composition according to claim 1, **characterized in that** the poly(vinylalcohol) fibres (B1) have a titre of at least 1,0 dtex and lower than 10,0 dtex.

3. Composition according to claim 1 or claim 2, **characterized in that** the polypropylene fibres (B2) are **characterized by** a titre of at least 0,7 dtex and lower than 2,5 dtex.

4. Composition according to one of the preceding claims, **characterized in that** the polypropylene fibres (A) have a titre of at least 10,0 dtex and lower than 18,0 dtex.

5. Composition according to one of the preceding claims, **characterized in that** the polypropylene fibres (A) have a length of from 6 mm to 30 mm.

6. Composition according to one of the preceding claims, **characterized in that** the fibres (A) and (B) have a tenacity of at least 8 cN/dtex.

7. Composition according to one of the preceding claims, **characterized in that** it comprises from 0,05 to 5,0 weight % of fibres (A) with respect to the total initial dry weight of the composition.

8. Composition according to one of the preceding claims, **characterized in that** it comprises from 0,5 to 5, 0 weight % of fibres (B) with respect to the total initial dry weight of the composition.

9. Composition according to claim 7, **characterized in that** it comprises from 0,1 to 1,5 weight % of fibres (A) .

10. Composition according to claim 8, **characterized in that** it comprises from 0,5 to 3,5 weight % of fibres (B).

11. Composition according to any of the preceding claims, **characterized in that** the polypropylene fibres (A) are **characterized by** a Young modulus of at least 160 cN/dtex.

12. Composition according to any of the preceding claims, **characterized in that** the polypropylene fibres (A) are **characterized by** an elongation at break not higher than 1 7%.

13. Fibre-cement product manufactured by means of a composition according to any of claims 1 to 12.

14. Fibre-cement product according to claim 13, **characterized in that** it is a flat or corrugated sheet.

## Patentansprüche

1. Zusammensetzung für die Herstellung von Faserzementprodukten mit Polypropylen-Fasern (A) und anderen synthetischen organischen Fasern (B), **dadurch gekennzeichnet, dass**:
- die Polypropylen-Fasern (A) einen Titer höher als 6,0 dtex und niedriger als 20,0 dtex haben und
- die synthetischen organischen Fasern (B) aus Poly(vinylalkohol)-Fasern (B 1) mit einem Titer von mindestens 0,5 dtex und niedriger als 15,0 dtex oder Polypropylen-Fasern (B2) mit einem Titer von mindestens 0,5 dtex und niedriger als 3,0 dtex (B2) oder deren Mischungen ausgewählt werden.

2. Zusammensetzung nach Anspruch 1, **dadurch gekennzeichnet, dass** die Poly(vinylalkohol)-Fasern (B 1) einen Titer von mindestens 1,0 dtex und niedriger als 10,0 dtex haben.

3. Zusammensetzung nach Anspruch 1 oder Anspruch 2, **dadurch gekennzeichnet, dass** die Polypropylen-Fasern (B 2) einen Titer von mindestens 0,7 dtex und niedriger als 2,5 dtex haben.

4. Zusammensetzung nach einem der vorhergehenden Ansprüche, **dadurch gekennzeichnet, dass** die Polypropylen-Fasern (A) einen Titer von mindestens 10,0 dtex und niedriger als 18,0 dtex haben.

5. Zusammensetzung nach einem der vorhergehenden Ansprüche, **dadurch gekennzeichnet, dass** die Polypropylen-Fasern (A) eine Länge von 6 mm bis 30 mm haben.

6. Zusammensetzung nach einem der vorhergehenden Ansprüche, **dadurch gekennzeichnet, dass** die Fasern (A) und (B) eine Festigkeit von mindestens 8 cN/dtex haben.

7. Zusammensetzung nach einem der vorhergehenden Ansprüche, **dadurch gekennzeichnet, dass** sie 0,05 bis 5,0 Gewichtprozent der Fasern (A) in Bezug auf das anfängliche Gesamttrockengewicht der Zusammensetzung enthält.

8. Zusammensetzung nach einem der vorhergehenden Ansprüche, **dadurch gekennzeichnet, dass** sie 0,5 bis 5,0 Gewichtprozent der Fasern (B) in Bezug auf das anfängliche Gesamttrockengewicht der Zusammensetzung enthält.

9. Zusammensetzung nach Anspruch 7, **dadurch gekennzeichnet, dass** sie 0,1 bis 1,5 Gewichtprozent der Fasern (A) enthält.

10. Zusammensetzung nach Anspruch 8, **dadurch gekennzeichnet, dass** sie 0,5 bis 3,5 Gewichtprozent der Fasern (B) enthält.

11. Zusammensetzung nach einem der vorhergehenden Ansprüche, **dadurch gekennzeichnet, dass** die Polypropylen-Fasern (A) einen Elastizitätsmodul von mindestens 160 cN/dtex haben.

12. Zusammensetzung nach einem der vorhergehenden Ansprüche, **dadurch gekennzeichnet, dass** die Polypropylen-Fasern (A) durch eine Bruchdehnung von weniger als 17 % gekennzeichnet sind.

13. Mittels einer Zusammensetzung nach einem der Ansprüche 1 bis 12 hergestellte Faserzementprodukte.

14. Faserzementprodukt nach Anspruch 13, **dadurch gekennzeichnet, dass** es eine Tafel oder eine Wellplatte ist.

## Revendications

1. Composition pour la fabrication de produits en fibrociment comprenant des fibres de polypropylène (A) et d'autres fibres organiques synthétiques (B), **caractérisée en ce que** :
- les fibres de polypropylène (A) présentent un titre supérieur à 6,0 dtex et inférieur à 20,0 dtex ; et
- les fibres organiques synthétiques (B) sont sélectionnées parmi les fibres d'alcool (poly)vinylique (B1) présentant un titre minimal de 0,5 dtex et inférieur à 15,0 dtex ou les fibres de polypropylène (B2) présentant un titre minimal de 0,5 dtex et inférieur à 3,0 dtex (B2) dans leurs mélanges.

2. Composition selon la revendication 1, **caractérisée en ce que** les fibres d'alcool (poly)vinylique (B1) présentent un titre minimal de 1,0 dtex et inférieur à 10,0 dtex.

3. Composition selon la revendication 1 ou la revendication 2, **caractérisée en ce que** les fibres de polypropylène (B2) présentent un titre minimal de 0,7 dtex et inférieur à 2,5 dtex.

4. Composition selon l'une des revendications précédentes, **caractérisée en ce que** les fibres de polypropylène (A) présentent un titre minimal de 10,0 dtex et inférieur à 18,0 dtex.

5. Composition selon l'une des revendications précédentes, **caractérisée en ce que** les fibres de polypropylène (A) présentent une longueur variant entre 6 et 30 mm.

6. Composition selon l'une des revendications précédentes, **caractérisée en ce que** les fibres (A) et (B) présentent une ténacité minimale de 8 cN / dtex.

7. Composition selon l'une des revendications précédentes, **caractérisée en ce qu'**elle comprend entre 0,05 et 5,0 % en poids de fibres (A) par rapport au poids à sec initial total de la composition.

8. Composition selon l'une des revendications précédentes, **caractérisée en ce qu'**elle comprend entre 0,5 et 5,0 % en poids de fibres (B) par rapport au poids à sec initial total de la composition.

9. Composition selon la revendication 7, **caractérisée en ce qu'**elle comprend entre 0, 1 et 1,5 % en poids de fibres (A).

10. Composition selon la revendication 8, **caractérisée en ce qu'**elle comprend entre 0,5 et 3,5 % en poids de fibres (B).

11. Composition selon l'une quelconque des revendications précédentes, **caractérisée en ce que** les fibres de polypropylène (A) présentent un module d'Young minimal de 160 cN / dtex.

12. Composition selon l'une quelconque des revendications précédentes, **caractérisée en ce que** les fibres de polypropylène (A) présentent un allongement à la rupture maximal de 17 %.

13. Produit en fibrociment fabriqué au moyen d'une composition selon l'une quelconque des revendications 1 à 12.

14. Produit en fibrociment selon la revendication 13, **caractérisé en ce qu'**il est une plaque lisse ou ondulée.
